# EUROPEAN PATENT SPECIFICATION

(11) **EP 1 007 453 B1**
(45) Date of publication and mention of the grant of the patent: **21.11.2001**
(21) Application number: 98941899.1
(22) Date of filing: 27.08.1998
(51) Int. Cl.: B65G 47/252

(54) **DEVICE FOR ARRANGING LYING OBJECTS INTO A ROW OF UPRIGHT OBJECTS**
VORRICHTUNG ZUM AUSRICHTEN VON LIEGENDEN GEGENSTÄNDEN IN EINE REIHE VON STEHENDEN GEGENSTÄNDEN
APPAREIL PERMETTANT DE FORMER UNE RANGEE D'OBJETS EN POSITION VERTICALE A PARTIR D'OBJETS EN POSITION HORIZONTALE

(30) Priority: 27.08.1997 NL 1006859
(43) Date of publication of application: 14.06.2000
(73) Proprietor: Prakken, Bouwe, 3471 EG Kamerik (NL)
(72) Inventor: Prakken, Bouwe, 3471 EG Kamerik (NL)
(74) Representative: Jorritsma, Ruurd
(86) International application number: NL9800484
(87) International publication number: WO9910261

(56) References cited:
- US-A- 5 040 662

## Description

The invention relates to a device for arranging objects fed in horizontally, such as filled bags, in the form of a row of upright objects, comprising:
- a rotor with a number of pockets distributed with equal angular spacing around the circumference,
- supply conveyor means for taking the objects in a horizontal position into the pockets,
- discharge conveyor means for discharging the objects in a row of regularly arranged objects, each object being just discharged at the moment it already has un upright position in a pocket, which discharge conveyor means comprise a conveyor with a number of endless belts, each guided around the same two deflection pulleys, one of which is bearing-mounted in such a way that its axis substantially coincides with the axis of the rotor.

Such a device is disclosed in US-A-5040662.

The object of the present invention is to design such a device so that the objects can be discharged in a compact row standing upright, the objects in the row being in contact with each other.

According to the invention, the device mentioned in the preamble to this end is characterized in that the rotor comprises two parts spaced from each other, that at least one of the endless belts of the discharge conveyor extends between the rotor parts, and that each of the rotor parts has a number of strips corresponding to the number of pockets and each of such strips extending according to an arc between two successive pockets, the distance of the arc to the rotor axis decreasing - as viewed in the direction of rotation of the rotor necessary to let the device function - with a value which substantially corresponds to the thickness of one of said objects, so that the objects are being discharged in a position abutting each other.

Please note that the device according to US-A-5040662 is not able to meet the object of the present invention. The discharge objects on the take away conveyor are in an upstanding position however spaced from each other.

Preferably the supply conveyor extends until it is between the wheels of the rotor.

In order to ensure that the upright objects do not slide away, the band conveyor which has a conveyor surface with a high coefficent of friction, connects to the belt conveyor.

The device can be regulated and controlled in a simple manner when it comprises a first sensor which establishes whether an object is entering a pocket and starts the drive motor for the rotor, and a second sensor which establishes whether the rotor is approaching an angle of rotation of 90° corresponding to the angular spacing between the pockets, stops the drive motor for the rotor and starts the motor for the belt conveyor and the discharge conveyor, in such a way that the belt conveyor and the discharge conveyor transport the objects over substantially the thickness of an object.

The invention will now be explained in greater detail with reference to the figures, in which an exemplary embodiment is shown.

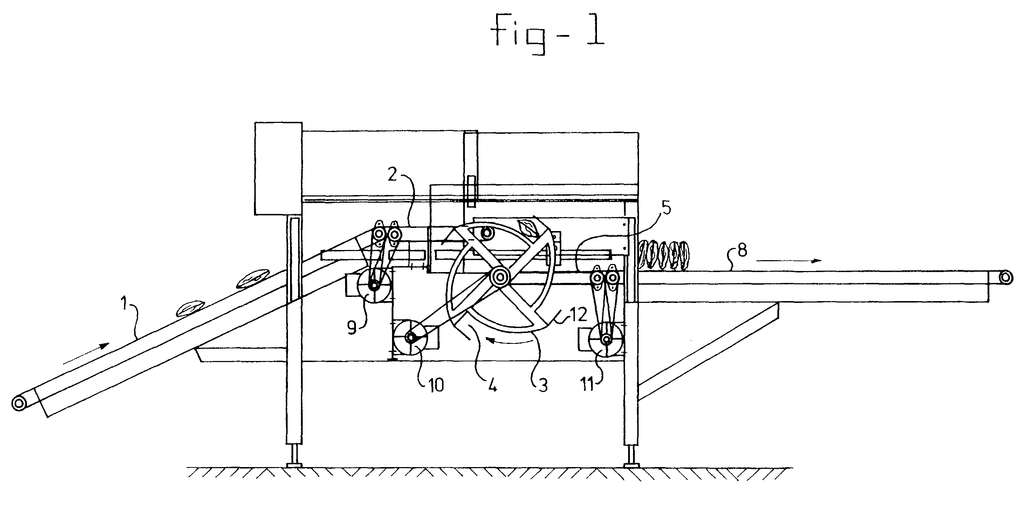

Figure 1 shows a side view of the device.

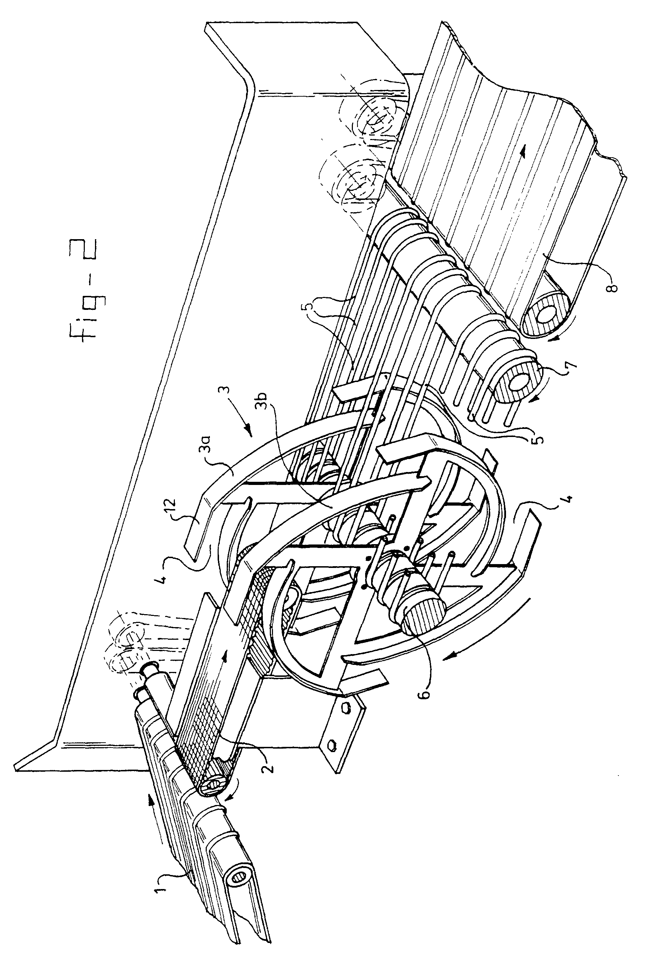

Figure 2 shows a perspective view of the device.

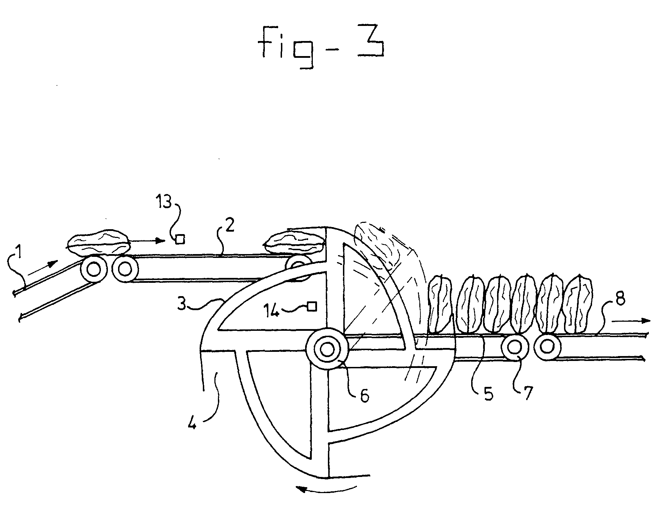

Figure 3 shows a more or less diagrammatic view of a part of the device.

The device shown serves to arrange irregularly supplied bags (or other objects) filled with material, such as potato crisps, in the form of a row of contiguous upright bags. The device comprises an upward slanting supply conveyor 1 for the horizontal bags, a horizontal supply conveyor 2 which connects at its supply end to the discharge end of the conveyor 1, a rotor 3 with four pockets 4 which have a mutual angular spacing of 90° relative to the axis of the rotor, discharge conveyor means in the form of a belt conveyor 5, the belts of which are guided around two deflection pulleys 6 and 7, and a discharge conveyor 8, the conveyor surface of which has a high coefficient of friction.

Extending between each pair of pockets 4 is a projection, the diameter of which - viewed in the direction of rotation of the rotor - decreases gradually and at the position of a pocket increases with a jump. There are therefore four projections.

The rotor 3 consists of two wheels 3a and 3b driven on a common shaft. Between these wheels 3a, 3b extend three belts of the belt conveyor 5, and three belts of the belt conveyor 5 also extend on the outside of each of the wheels 3a and 3b. There are therefore in total nine belts.

The common drive motor for the supply conveyors 1 and 2 is indicated by 9, the drive means for the rotor by 10, and the common drive means for the discharge conveyors 5 and 8 by 11. The transmissions between the motors and the deflection drive pulleys or the rotor 3 consist of straps, belts or chains.

The four pockets 4 in the rotor 3 are provided with strips 12 running according to the line of contact of the rotor.

Above the conveyor 2 is a sensor 13, which establishes whether a bag supplied by the conveyor 2 is entering a pocket 4 of the rotor 3 and gives a signal to the motor 10 to start the rotation of the rotor. A sensor 14 is placed near the rotor shaft, which sensor establishes whether the rotating rotor is reaching or approaching a position in which the rotor has made a rotation of 90°. The rotor motor 10 is brought to a standstill by means of a signal from the sensor 14, and the motor 11 is started and stopped in such a way that the movement of the upright bags takes place over the thickness thereof.

What is important for the invention is that the axis of the deflection pulley 6 of the belt conveyor 5 substantially coincides with the axis of the rotor 3, so that the deflection pulley 6 rotates freely about the shaft of the rotor 3, and it is also ensured by means of the belt conveyor 5 that the belts can take over the bags fed in at the level of the axis of the rotor 3 of a pocket 4 and can support them with only small spaces between them over the entire width of the bags.

The rotor 3 rotates discontinuously through an angle of 90° (or if there is a different number of pockets, through a different angle) and the discharge conveyors 5 and 8 move discontinuously over the thickness of a bag.

## Claims

1. Device for arranging objects fed in horizontally, such as filled bags, in the form of a row of upright objects, comprising:
- a rotor (3) with a number of pockets (4) distributed with equal angular spacing around the circumference,
- supply conveyor means (2) for taking the objects in a horizontal position into the pockets (4),
- discharge conveyor means (5, 8) for discharging the objects in a row of regularly arranged objects, each object being just discharged at the moment it already has un upright position in a pocket, which discharge conveyor means comprise a conveyor (5) with a number of endless belts, each guided around the same two deflection pulleys (6, 7), one of which is bearing-mounted in such a way that its axis substantially coincides with the axis of the rotor (3),
**characterized in that** the rotor (3) comprises two parts (3a, 3b) spaced from each other, that at least one of the endless belts of the discharge conveyor (5) extends between the rotor parts (3a, 3b), and that each of the rotor parts (3a, 3b) has a number of strips corresponding to the number of pockets and each of such strips extending according to an arc between two successive pockets, the distance of the arc to the rotor axis decreasing - as viewed in the direction of rotation of the rotor necessary to let the device function - with a value which substantially corresponds to the thickness of one of said objects, so that the objects are being discharged in a position abutting each other.

2. Device according to claim 1, **characterized in that** the supply conveyor (2) extends until it is between the wheels (3a, 3b) of the rotor (3).

3. Device according to claim 1 or 2, **characterized in** hat the band conveyor (8) which has a conveyor surface with a high coefficent of friction, connects to the belt conveyor (5).

4. Device according to one of the preceding claims, **characterized by** a first sensor (13) which establishes whether an object is entering a pocket (4) and starts the drive motor (10) for the rotor (3), and a second sensor (14) which establishes whether the rotor (3) is approaching an angle of rotation of 90° corresponding to the angular spacing between the pockets, stops the drive motor (10) for the rotor (3) and starts the motor (11) for the belt conveyor (5) and the discharge conveyor (8), in such a way that the belt conveyor (5) and the discharge conveyor (8) transport the objects over substantially the thickness of an object.

## Patentansprüche

1. Einrichtung zum Anordnen von horizontal zugeführten Objekten, wie gefüllten Beuteln, in der Form einer Reihe aufrechter Objekte, umfassend:
- einen Rotor (3) mit einer Anzahl von Taschen (4), die unter gleicher Winkelbeabstandung um den Umfang herum verteilt sind,
- ein Zuführungsfördermittel (2) zum Bringen der Objekte in einer horizontalen Position in die Taschen (4),
- Entladungsfördermittel (5, 8) zum Entladen der Objekte in einer Reihe von regulär angeordneten Objekten, wobei jedes Objekt in dem Augenblick gerade entladen wird, in dem es bereits eine aufrechte Position in einer Tasche hat, welche Entladungsfördermittel einen Förderer (5) mit einer Anzahl von endlosen Bändern umfasst, von denen jedes um die gleichen beiden Umlenkrollen (6, 7) geführt ist, von denen eine in einer solchen Weise lagermontiert ist, dass ihre Achse im wesentlichen mit der Achse des Rotors (3) übereinstimmt, **dadurch gekennzeichnet, dass** der Rotor (3) zwei voneinander beabstandete Teile (3a, 3b) umfasst, dass sich wenigstens eines der endlosen Bänder des Entladungsförderers (5) zwischen den Rotorteilen (3a, 3b) erstreckt und dass jedes der Rotorteile (3a, 3b) eine Anzahl von Streifen hat, welche der Anzahl der Taschen entsprechen, und wobei sich jeder von solchen Streifen gemäß einem Bogen zwischen zwei aufeinanderfolgenden Taschen erstreckt, wobei der Abstand des Bogens zu der Rotorachse - gesehen in der Drehrichtung des Rotors, die dazu notwendig ist, die Einrichtung funktionieren zu lassen - mit einem Wert abnimmt, welcher im wesentlichen der Dicke von einem der Objekte entspricht, so dass die Objekte in einer Position, in der sie aneinander anliegen bzw. -stoßen entladen werden.

2. Einrichtung gemäß Anspruch 1, dadurch **gekennzeichnet,** dass sich der Zuführungsförderer (2) bis er zwischen den Rädern (3a, 3b) des Rotors (3) ist, erstreckt.

3. Einrichtung gemäß Anspruch 1 oder 2, **dadurch gekennzeichnet, dass** der Bandförderer (8), welcher eine Förderoberfläche mit einem hohen Reibungskoeffizienten hat, eine Verbindung mit dem Bandförderer (5) bildet.

4. Einrichtung gemäß einem der vorhergehenden Ansprüche, **gekennzeichnet durch** einen ersten Sensor (13), welcher nachweist, ob ein Objekt in eine Tasche (4) eintritt, und den Antriebsmotor (10) für den Rotor (3) startet, und einen zweiten Sensor (14), welcher nachweist, ob sich der Rotor (3) einem Drehwinkel von 90° annähert, welcher dem Winkelabstand zwischen den Taschen entspricht, den Antriebsmotor (10) für den Rotor (3) stoppt und den Motor (11) für den Bandförderer (5) und den Entladungsförderer (8) startet, und zwar in einer solchen Art und Weise, dass der Bandförderer (5) und der Entladungsförderer (8) die Objekte über im wesentlichen die Dicke eines Objekts transportieren.

## Revendications

1. Dispositif d'agencement d'objets alimentés horizontalement, tels que des sacs pleins, sous la forme d'une rangée d'objets verticaux, comprenant :
- un rotor (3) ayant un certain nombre de poches (4) réparties avec un espacement angulaire égal sur la circonférence,
- un moyen formant transporteur d'alimentation (2) permettant de prendre les objets en position horizontale dans les poches (4),
- un moyen formant transporteur de décharge (5, 8) permettant de décharger les objets en une rangée d'objets régulièrement agencés, chaque objet étant déchargé juste au moment où il prend une position verticale dans la poche, lequel moyen formant transporteur de décharge comprend un transporteur (5) ayant un certain nombre de courroies sans fin, chacune étant guidée autour de deux poulies de renvoi (6, 7), l'une d'elles est supportée par des roulement de telle façon que son axe coïncide sensiblement avec l'axe du rotor (3),
**caractérisé en ce que** le rotor (3) comprend deux pièces (3a, 3b) espacées l'une de l'autre, **en ce que** la au moins une des courroies sans fin du transporteur de décharge (5) s'étend entre les pièces du rotor (3a, 3b), et **en ce que** chacune des pièces du rotor (3a, 3b) présente un certain nombre de stries correspondant au nombre de poches et chacune de ces stries s'étend selon un arc entre deux poches successives, la distance séparant l'arc de l'axe du rotor décroissant - vue dans le sens de rotation du rotor nécessaire pour faire fonctionner le dispositif- d'une valeur qui correspond sensiblement à l'épaisseur de l'un desdits objets, de sorte que les objets sont déchargés dans une position dans laquelle ils butent les uns contre les autres.

2. Dispositif selon la revendication 1, **caractérisé en ce que** le transporteur d'alimentation (2) s'étend jusqu'à ce qu'il se trouve entre les roues (3a, 3b) du rotor (3).

3. Dispositif selon la revendication 1 ou 2, **caractérisé en ce que** le transporteur à courroie (8) qui présente une surface de transport ayant un coefficient de frottement élevé, est raccordé au transporteur à courroie (5).

4. Dispositif selon l'une quelconque des revendications précédentes, **caractérisé par** un premier capteur (13) qui détermine si un objet pénètre dans une poche (4) et démarre le moteur d'entraînement (10) du rotor (3), et un second capteur (14) qui détermine si le rotor (3) approche un angle de rotation de 90° qui correspond à l'espacement angulaire entre les poches, arrête le moteur d'entraînement (10) du rotor (3) et démarre le moteur (11) du transporteur à courroie (5) et le transporteur de décharge (8), de telle manière que le transporteur à courroie (5) et le transporteur de décharge (8) transportent les objets sur sensiblement l'épaisseur d'un objet.
